# EUROPÄISCHE PATENTANMELDUNG

(11) **EP 3 734 120 A1**
(43) Veröffentlichungstag der Anmeldung: **04.11.2020**
(21) Anmeldenummer: 19172281.8
(22) Anmeldetag: 02.05.2019
(51) Int. Cl.: F16H 57/04

(54) **GETRIEBE MIT REDUZIERTER VERLUSTLEISTUNG, BETRIEBSVERFAHREN UND INDUSTRIE-APPLIKATION**

(71) Anmelder: Flender GmbH, 46395 Bocholt (DE)
(72) Erfinder: Bauer, Björn, 45289 Essen (DE)
(74) Vertreter: Maier, Daniel Oliver

(57) **Zusammenfassung**

Die Erfindung betrifft ein Getriebe (10), das ein Reservoir (16) für einen Schmierstoff (20) zur Schmierung von Zahnrädern (18) und einen Verdrängungskörper (30) umfasst. Der Verdrängungskörper (30) ist zu einem Einstellen eines Schmierstoffpegels (22, 24) ausgebildet. Erfindungsgemäß weist das Getriebe (10) einen Aktor (40) auf, der zu einem temperaturabhängigen Bewegen (35) des Verdrängungskörpers (30) durch eine Benetzung mit dem Schmierstoff (20) ausgebildet ist. Die Erfindung betrifft auch ein entsprechendes Betriebsverfahren (100) für ein Getriebe (10), eine Industrie-Applikation (60) und eine Windkraftanlage (70), die mit einem entsprechenden Getriebe (10) ausgestattet sind.

## Beschreibung

Die Erfindung betrifft ein Getriebe mit reduzierter Verlustleistung und ein Betriebsverfahren für ein solches Getriebe, durch das ein Schmierstoffpegel einstellbar ist. Die Erfindung betrifft auch eine Industrie-Applikation, die mit einem entsprechenden Getriebe ausgerüstet ist.

Aus DE 102 38 000 B4 ist ein Getriebe für ein Kraftfahrzeug bekannt, das ein Gehäuse umfasst, in dem ein Öl eingefüllt ist. Das Getriebe weist einen Verdrängungskörper auf, der als Hohlzylinder ausgebildet ist und in das Öl einführbar ist um einen Ölpegel anzuheben. Das Getriebe weist auch einen wannenartigen Verdrängungskörper auf, der teilweise in das Öl eintauchbar ist. Ferner ist das Getriebe mit einem Dehnstoffelement versehen, das gekapselt in einem hohlzylindrischen Körper aufgenommen ist. Das Dehnstoffelement ist derart angeordnet, dass durch eine temperaturbedingte Volumenänderung des Dehnstoffelements ein an einem Gehäusedeckel angebrachter Kolben beweglich ist, durch den wiederum mittels eines Hohlzylinders der Ölpegel durch Verdrängung einstellbar ist.

Die Druckschrift DE 10 2007 005 523 A1 offenbart ein Getriebe für ein Kraftfahrzeug, das ein Gehäuse aufweist, bei dem ein unterer Abschnitt als Ölwanne bzw. Ölsumpf dient. Die Ölwanne ist hydraulisch über einen Verbindungskanal mit einem Zylinder verbunden ist. Im Zylinder ist ein beweglicher Kolben aufgenommen, durch den ein in der Ölwanne vorliegender Ölpegel angehoben oder abgesenkt werden kann. Der Kolben ist über ein Regelventil mittels Druckluft beweglich. Das Regelventil wird bestimmungsgemäß in Abhängigkeit von Kraftfahrzeugparametern betätigt, beispielsweise einer Fahrzeugneigung oder einer Fahrgeschwindigkeit.

Die Dissertation mit dem Titel "Formgedächtnislegierungen in der Antriebstechnik: Aktoren in Getrieben und Kupplungen; Kerbwirkungszahlen" von Björn Bauer, Ruhr-Universität Bochum, beschreibt die Verwendung von Formgedächtnislegierungen in Aktoren in Getrieben und Kupplungen. In Getrieben dienen diese Aktoren dazu, Verzahnungen in unterschiedlichen Temperaturbereichen spielarm einzustellen sowie das Axialspiel von Wälzlagern temperaturabhängig zu variieren.

In einer Vielzahl an Anwendungsgebieten, beispielsweise Industrie-Applikationen, besteht Bedarf an Getrieben, die dazu geeignet sind, einen vorhandenen Ölpegel an veränderliche Bedingungen und Anforderungen anzupassen. Dabei werden hohe Anforderungen an die Zuverlässigkeit der Getriebe, deren Wartungsfreundlichkeit und deren Wirtschaftlichkeit gestellt. Der Erfindung liegt die Aufgabe zugrunde, ein Getriebe bereitzustellen, das über eine Schmierstoffversorgung verfügt, die in zumindest einer der skizzierten Anforderungen eine Verbesserung bietet.

Die Aufgabenstellung wird durch ein erfindungsgemäßes Getriebe gelöst, das ein Gehäuse aufweist, in dem eine Mehrzahl von Zahnrädern drehmomentübertragend aufgenommen ist. Zumindest ein Abschnitt des Gehäuses ist als Reservoir ausgebildet, das zum Aufnehmen eines Schmierstoffs, beispielsweise einem Öl, ausgebildet ist. Der Schmierstoff dient im Betrieb des Getriebes zu einem Schmieren und einem Kühlen der Zahnräder. Im Getriebe ist ein Schmierstoffvorrat aufgenommen, durch den ein Minimalpegel des Schmierstoffs gewährleistet wird. Des Weiteren ist im Getriebe ein Verdrängungskörper angeordnet, der dazu ausgebildet ist, zumindest teilweise in den Schmierstoff eingetaucht zu werden. Die beispielsweise durch ein Eintauchen oder Vergrößern des Verdrängungskörpers hervorgerufene Verdrängung von Schmierstoff führt zu einem Ansteigen des vorliegenden Schmierstoffpegels. Umgekehrt führt beispielweise ein zumindest teilweises Herausnehmen oder Verkleinern des Verdrängungskörpers zu einem Absinken des Schmierstoffpegels. Der Schmierstoffpegel ist daher durch den Verdrängungskörper einstellbar. Erfindungsgemäß weist das Getriebe einen Aktor auf, der zu einem mittelbaren oder unmittelbaren Bewegen des Verdrängungskörpers ausgebildet ist. Das Bewegen des Verdrängungskörpers umfasst dabei das zumindest teilweise Eintauchen in den Schmierstoff und das zumindest teilweise Herausnehmen aus dem Schmierstoff. Der Aktor ist dazu ausgebildet, das Bewegen des Verdrängungskörpers temperaturabhängig durchzuführen. Dazu ist der Aktor derart ausgebildet, dass dieser durch ein Benetzen durch den Schmierstoff, betätigt wird. Hierbei führt eine thermische Einwirkung des Schmierstoffs auf den Aktor dazu, dass dieser ein Bewegen des Verdrängungskörpers einleitet. Der Aktor ist hier zumindest teilweise in den Schmierstoff eingetaucht im erfindungsgemäßen Getriebe montiert. Ferner ist der Aktor dazu ausgebildet, bei einer Temperaturerhöhung, die durch Benetzen mit dem Schmierstoff hervorgerufen wird, eine mechanische Reaktion des Aktors ausgelöst wird und bei einer Temperaturverringerung eine dazu gegenläufige mechanische Reaktion des Aktors ausgelöst wird. Die Temperaturerhöhung und Temperaturverringerung wird durch Wärmeleitung zwischen dem Aktor und dem Schmierstoff hervorgerufen.

Infolgedessen ist die Bewegung des Verdrängungskörpers unmittelbar durch den Aktor vorgebbar, und somit der sich einstellende Schmierstoffpegel im Getriebe. Der Aktor stellt den Schmierstoffpegel selbsttätig ein, so dass eine externe Steuervorgabe entbehrlich ist. Das erfindungsgemäße Getriebe erlaubt somit ein zuverlässiges Einstellen des Schmierstoffpegels mit einem Minimum an Bauteilen. Darüber hinaus kann das Reservoir für den Schmierstoff an einer Vielzahl an Stellen am Getriebe ausgebildet sein. Die Funktion, den Schmierstoffpegel einzustellen, kann im erfindungsgemäßen Getriebe an solchen Stellen platziert werden, die für weitere bauliche Anforderungen keine Einschränkungen darstellen, oder die einfach zugänglich sind. Das erfindungsgemäße Getriebe bietet somit ein hohes Maß an Flexibilität bei der Konstruktion und daher ein breites mögliches Einsatzspektrum und kann in eine Vielzahl von Anwendungsfällen integriert werden.

In einer Ausführungsform des beanspruchten Getriebes kann der Aktor einen temperaturabhängigen E-Modul aufweisen. Bei einer Temperaturerhöhung stellt sich einer materialabhängigen Temperatur eine beginnende Erhöhung des E-Moduls ein, die bei Erreichen einer weiteren Temperatur abgeschlossen ist und ab der keine weiter Erhöhung des E-Moduls erfolgt. Bei einem Abkühlen und Unterschreiten einer weiteren materialabhängigen Temperatur reduziert sich der E-Modul wieder auf das Ausgangsniveau. Die Änderung des E-Moduls verläuft dabei zwischen einer Untergrenze und einer Obergrenze, die materialabhängig sind. Hieraus ergibt sich ein veränderliches elastisches Verhalten des Aktors, das wiederum in eine mechanische Reaktion umsetzbar ist. Das mechanische Verhalten des Aktors ist infolgedessen in einfacher Weise berechenbar und in eine Vielzahl an Einsatzzwecken anpassbar.

Des Weiteren kann der Verdrängungskörper als Expansionskörper oder als Tauchkörper ausgebildet sein. Ein Expansionskörper kann beispielsweise als eine mit Gas oder Flüssigkeit füllbare Blase ausgebildet sein, die im Reservoir angebracht ist. Infolge der mechanischen Reaktion des Aktors kann ein Einleiten von Gas oder Flüssigkeit in den Expansionskörper ausgelöst werden, so dass sich der Expansionskörper vergrößert. Alternativ oder ergänzend kann der Aktor als ein Ventil des Expansionskörpers ausgebildet sein, das zumindest teilweise in den Schmierstoff eingetaucht ist und bei einem Temperaturanstieg oder einer Temperaturrückgang ein Öffnen und Schließen des Ventils auslöst. Der Aktor kann dabei selbst als Komponente des Ventils ausgebildet sein. Als Gas kann Umgebungsluft und als Flüssigkeit Schmierstoff eingesetzt werden, durch die bei einem Austreten aus dem Expansionskörper keine Kontamination des Schmierstoffs im Reservoir eintritt.

In einer weiteren Ausführungsform des beanspruchten Getriebes ist der Aktor im Reservoir in einem Bereich eines Zahnrads angeordnet. Der Aktor kann dabei teilweise oder vollständig in den Schmierstoff im Reservoir eingetaucht mit dem Gehäuse verbunden sein. Insbesondere kann der Aktor im Reservoir in einem Bereich angebracht sein, in dem ein Rückfluss von Schmierstoff von den Zahnrädern das Reservoir erreicht. Der Schmierstoff im Rückfluss weist eine Temperatur auf, die im Wesentlichen unmittelbar durch die Beanspruchung an Zahnrädern verursacht ist. Beispielsweise sind Kühlungseffekte durch Vermischung mit weiterem Schmierstoff im Bereich eines Rückflusses ins Reservoir reduziert. Der Aktor ist derartig positionierbar, dass eine Temperaturänderung des Schmierstoffs, die mit einer Beanspruchungsänderung des Getriebes korrespondiert, schnell erfassbar ist. Die mechanische Reaktion des Aktors kann somit verzögerungsarm eingeleitet werden, was ein schnelles Einstellen des Schmierstoffpegels an die vorliegende Betriebssituation erlaubt. Insbesondere sind bei einer Steigerung einer Drehzahl im Getriebe Planschverluste reduzierbar. Das beanspruchte Getriebe ist deshalb bei gleichbleibendem Wirkungsgrad zu einem dynamischeren Betriebsverhalten geeignet. Ferner kann der Aktor im Reservoir an einer Stelle positioniert werden, die für eine Wartung einfach zugänglich ist.

Insbesondere kann der Aktor auch im Bereich eines Zahnrads platziert sein. Unter dem Bereich des Zahnrads ist ein Abschnitt unterhalb des Zahnrads oder seitlich davon zu verstehen, in den Schmierstoff nach einem Betrieb auf einer Oberfläche des Zahnrads eingeleitet wird. Die Temperatur des Schmierstoffs in diesem Bereich folgt der mechanischen Beanspruchung des Zahnrads im Wesentlichen unmittelbar. Die Wirkung von Vermischung mit weiterem Schmierstoff wird so weiter reduziert. Dadurch wird der Vorteil einer schnellen mechanischen Reaktion des Aktors auf die vorliegende Beanspruchung des Getriebes in erhöhtem Ausmaß erzielt.

Ferner kann der Aktor einen Kontaktbereich aufweisen, der dazu ausgebildet ist, durch die Benetzung mit dem Schmierstoff eine temperaturabhängige mechanisch Reaktion auszuführen. Der Kontaktbereich kann dabei ein Abschnitt des Aktors selbst sein, also einstückig mit dem Aktor ausgebildet sein. Alternativ oder ergänzend kann der Kontaktbereich auch als eine Komponente ausgebildet sein, die mit dem Aktor verbunden ist. Der Kontaktbereich kann zum Hervorrufen einer temperaturabhängigen mechanischen Reaktion aus einem Formgedächtnismaterial ausgebildet sein. Derartige Formgedächtnismaterialien können beispielsweise eine Nickel-Titan-Legierung oder eine Nickel-Titan-Kupfer-Legierung sein. Formgedächtnismaterialien sind dazu ausgebildet, bei einer Temperaturänderung in ihrer Zusammensetzung die vorhandenen Anteile an Austenit und Martensit zu verändern und ein Gefügeumwandlung zu durchlaufen. Dadurch wird beispielsweise der E-Modul des Formgedächtnismaterials verändert. Mittels der beanspruchten Lösung ist somit eine Funktionsintegration von Kontaktbereich und Aktor möglich, was eine insgesamt kompakte Konstruktion erlaubt. Das temperaturabhängige Verhalten von Formgedächtnismaterialien erfordert keine zusätzliche Sensorik oder Steuerung, so dass ein hohes Maß an Zuverlässigkeit erreichbar ist. Die beanspruchte Lösung ist daher unempfindlich und auch unter besonders harschen Einsatzbedingungen verwendbar. Dadurch wird die Spanne an möglichen Einsatzzwecken für das beanspruchte Getriebe weiter vergrößert. Darüber hinaus unterliegt das Formänderungsverhalten von Formgedächtnismaterialien keiner wesentlichen Degradation, so dass die beanspruchte Lösung dazu geeignet ist, die Lebensdauer eines Getriebes im bestimmungsgemäßen Betrieb ohne Weiteres zu überstehen. Die beanspruchte Lösung ist deshalb wartungsarm. Darüber hinaus sind mit Formgedächtnismaterialien am Aktor relativ lange Stellwege und gleichzeitig relativ hohe Stellkräfte erzielbar. Der Aktor kann dadurch ohne weitere Hilfsmittel in einfacher Weise ausreichend leistungsfähig dimensioniert werden.

In einer weiteren Ausführungsform des beanspruchten Getriebes ist der Aktor unmittelbar mit dem Verdrängungskörper mechanisch verbunden. Dabei kann der Verdrängungskörper als Tauchkörper ausgebildet sein. Somit wird der Verdrängungskörper durch die temperaturabhängige mechanische Reaktion des Aktors unmittelbar weiter in den Schmierstoff eingetaucht oder ein Auftauchen auf dem Schmierstoff erlaubt. Eine unmittelbare mechanische Verbindung zwischen dem Aktor und dem Verdrängungskörper kommt mit einer reduzierten Anzahl an Bauteilen aus, was eine schnelle und kosteneffiziente Herstellung der beanspruchten Lösung ermöglicht.

Alternativ oder ergänzend kann der Aktor auch über einen Übersetzungsmechanismus mit dem Verdrängungskörper verbunden sein. Ein Übersetzungsmechanismus kann zumindest einen Hebel aufweisen, durch den die temperaturabhängige mechanische Reaktion des Aktors in eine in puncto Auslenkung oder Kraft veränderte Einwirkung auf dem Verdrängungskörper erlaubt. Eine Steigerung der Auslenkung bzw. des Stellweges geht dabei mit einer Verringerung der Stellkraft einher. Je nach Bauweise des Verdrängungskörpers können unterschiedliche Einwirkungen notwendig sein um den Schmierstoffpegel in der angestrebten Weise einzustellen. Das beanspruchte Getriebe ist infolgedessen in einfacher Weise konstruktiv anpassbar. Ferner kann durch Einsatz eines geeigneten Übersetzungsmechanismus der Bedarf an kostenintensiven Formgedächtnismaterialien reduziert werden.

Ferner kann das Getriebe auch eine Mehrzahl von Aktoren aufweisen, die mit dem Tauchkörper, also dem Verdrängungskörper, verbunden ist. Dabei können gleiche oder unterschiedlich ausgebildete Aktoren mit dem Verdrängungskörper verbunden sein, die zusammen eine aggregierte temperaturabhängige mechanische Reaktion hervorrufen, durch die der Schmierstoffpegel einstellbar ist. Die Aktoren können so bausteinartige oder modular wirken, was eine breite Spanne an Möglichkeiten bietet, mit welchem Schmierstoffpegel welcher Temperatur des Schmierstoffs zu begegnen ist. Dieses Verhalten des beanspruchten Getriebes ist in einer temperaturabhängigen Pegel-Charakteristik beschreibbar. Die temperaturabhängige Pegel-Charakteristik liefert für den stationären Betrieb des Getriebes einen eindeutigen Zusammenhang zwischen der vorliegenden Temperatur des Schmierstoffs und dem einzustellenden Schmierstoffpegel. Die beanspruchte Lösung ist folglich für unterschiedliche Betriebsszenarien anpassbar. Eine Mehrzahl an Aktoren bietet darüber hinaus ein hohes Maß an Redundanz, und damit an Betriebssicherheit.

In einer weiteren Ausführungsform des beanspruchten Getriebes ist der Aktor als eine Feder ausgebildet, beispielsweise als Schraubenfeder. Federn können als Zugfedern, Druckfedern, ausgebildet sein, die ein im Wesentlichen lineares Kraft-Dehnungsverhalten zeigen. Federn sind in einer Vielzahl an Steifigkeiten und Größen einfach verfügbar und erlauben auch ein einfaches Kombinieren von mehreren Federn. Darüber hinaus kann eine Feder, die mit dem Gehäuse verbunden ist, durch das Eigengewicht eines Tauchkörpers belastet werden, und damit der Schmierstoffpegel in einfacher Weise eingestellt werden. Federn bieten auch eine geringe Neigung zur Materialermüdung, so dass ein zuverlässiger Betrieb der beanspruchten Lösung über die Lebensdauer des Getriebes möglich ist. Des Weiteren weisen Federn ein erhöhtes Verhältnis von Oberfläche zu Volumen auf. Dadurch ist eine Feder dazu geeignet, eine Temperaturänderung im Schmierstoff, in den sie zumindest teilweise eingetaucht ist, schnell aufzunehmen und ein thermisches Gleichgewicht zu erreichen. Das Auslösen der temperaturabhängigen mechanischen Reaktion des Aktors ist infolgedessen mit einer reduzierten Verzögerung möglich. Ferner sind unterschiedliche Typen von Federn auswählbar, um ein gewünschtes mechanisches Verhalten zu erzielen. Beispielsweise sind Schraubenfedern vorteilhaft um einen hohen Stellweg zu erzielen, während beispielsweise Tellerfedern eine hohe Stellkraft bieten.

Die zugrundeliegende Aufgabenstellung wird auch durch das erfindungsgemäße Betriebsverfahren für ein Getriebe gelöst. Das zu betreibende Getriebe weist ein Gehäuse auf, in dem Zahnräder drehmomentübertragend aufgenommen sind. Das Gehäuse umfasst ein Reservoir, in dem ein Schmierstoff aufgenommen ist, der dazu ausgebildet ist, die Zahnräder zu schmieren. Das Verfahren umfasst einen ersten Schritt, in dem das Getriebe in einem ersten Betriebszustand betrieben wird. Während des Betriebs im ersten Betriebszustand stellt sich ein erster Schmierstoffpegel ein, der mit einer Temperatur des Schmierstoffs korrespondiert. In einem zweiten Schritt erfolgt ein Einstellen eines zweiten Betriebszustands für das Getriebe. Dabei wird eine Temperatur des Schmierstoffs erfasst, die sich infolge des Einstellens auf den zweiten Betriebszustand ändert. Das Erfassen der Temperatur des Schmierstoffs erfolgt dabei im Reservoir für den Schmierstoff. In einem dritten Schritt erfolgt ein Einstellen eines zweiten Schmierstoffpegels, der auf den zweiten Betriebszustand angepasst ist. Der zweite Schmierstoffpegel wird dabei in Abhängigkeit von der erfassten Temperatur des Schmierstoffs eingestellt.

Das Einstellen des zweiten Schmierstoffpegels wird mittels eines Aktors durchgeführt. Der Aktor ist dazu ausgebildet, einen Verdrängungskörper temperaturabhängig zu bewegen. Die Bewegung des Aktors hängt dabei von einer Temperatur ab, die sich am Aktor durch ein Benetzen mit dem Schmierstoff einstellt. Das Benetzen des Aktors mit dem Schmierstoff führt zu einer Wärmeleitung zwischen dem Schmierstoff und dem Aktor. Durch die Temperatur des Schmierstoffs wird am Aktor eine mechanische Reaktion hervorgerufen, über die der Verdrängungskörper unmittelbar oder mittelbar beweglich ist.

Dadurch ist, je nach vorliegendem Betriebszustand, eine Anpassung des Schmierstoffpegels im Getriebe möglich. Insbesondere ist durch einen zweiten Schmierstoffpegel, der niedriger ist als ein erster Schmierstoffpegel, ein verlustarmer Betrieb möglich, wenn die zweite Drehzahl höher ist als die erste Drehzahl. Das Betriebsverfahren kommt dabei mit einem Minimum an Komponenten aus und ist deshalb zuverlässig und kosteneffizient umsetzbar. Das erfindungsgemäße Betriebsverfahren ist ferner bei einem Getriebe nach einer der oben beschriebenen Ausführungsformen ausführbar. Die technischen Aspekte des erfindungsgemäßen Getriebes sind deshalb auf das erfindungsgemäße Verfahren übertragbar.

Ferner können im beanspruchten Betriebsverfahren der erste und zweite Betriebszustand jeweils durch die darin vorliegende Drehzahl charakterisiert sein. Die Drehzahl bezieht sich dabei auf ein Zahnrad im Getriebe. Somit kann im ersten Betriebszustand eine erste Drehzahl vorliegend und/oder im zweiten Betriebszustand eine zweite Drehzahl, durch die im stationären Betrieb unterschiedliche Schmierstofftemperaturen hervorgerufen werden. Des Weiteren kann im beanspruchten Betriebsverfahren der zweite Schmierstoffpegel umso niedriger sein, je niedriger die zweite Drehzahl ist. Bei hohen Drehzahlen sind dadurch Planschverluste reduziert, was wiederum die Effizienz des Getriebes steigert. Bei reduzierten Drehzahlen wiederum wird durch einen hohen zweiten Schmierstoffpegel eine besonders vorteilhafte Schmierung der Zahnräder erzielt.

Darüber hinaus können der erste und zweite Betriebszustand auch weiter durch unterschiedliche Außentemperaturen oder andere betriebsrelevante Faktoren charakterisiert sein, durch die sich Einflüsse auf die Schmierstofftemperatur ergeben. Infolgedessen ist das beanspruchte Betriebsverfahren in einfacher Weise dazu geeignet, auf eine thermische Beanspruchung auf den Schmierstoff zu reagieren, die sich aus einer Vielzahl an Einflussgrößen ergibt.

In einer weiteren Ausführungsform des beanspruchten Betriebsverfahrens ist der Verdrängungskörper als Expansionskörper ausgebildet. Ein Expansionskörper kann beispielsweise eine Blase ein, die mit Gas oder Flüssigkeit befüllbar ist. Ein Befüllen oder Entleeren des Expansionskörpers kann durch den Aktor hervorgerufen werden, indem beispielsweise durch dessen mechanische Reaktion ein Druckventil am Expansionskörper betätigt wird. Alternativ oder ergänzend kann der Verdrängungskörper als Tauchkörper ausgebildet sein, der mittelbar oder unmittelbar durch den Aktor in den Schmierstoff eingetaucht wird oder aus dem Schmierstoff herausgenommen wird. Eine durch den Verdrängungskörper hervorgerufene Verdrängung von Schmierstoff wirkt im Wesentlichen sofort im gesamten Getriebe. Dadurch kann der Verdrängungskörper im Wesentlichen an jeglicher Stelle im Getriebe positioniert werden. Der Verdrängungskörper kann von Zahnrädern beabstandet angeordnet werden um so die Konstruktion der Zahnräder zu vereinfachen, also ohne zusätzliche Bauraumbeschränkungen aufzustellen. Die beanspruchte Lösung ist damit in einfacher Weise an eine Vielzahl an Getrieben, und damit Einsatzgebiete, anpassbar.

Ferner kann das Einstellen des zweiten Schmierstoffpegels im dritten Schritt selbsttätig erfolgen. Darunter ist zu verstehen, dass das Bewegen des Verdrängungskörpers ausschließlich durch den Aktor hervorgerufen wird. Die Verwendung weitergehender Steuereinheiten oder Regelungseinheiten ist somit entbehrlich. Des Weiteren besteht ein im Wesentlichen unmittelbarer Zusammenhang zwischen dem Betriebszustand des Getriebes und dem Schmierstoffpegel. Ein fehlerhaftes Bewegen des Verdrängungskörpers ist dadurch ausschließbar. Die so reduzierte Komplexität des beanspruchten Getriebes bietet ein hohes Maß an Zuverlässigkeit.

In einer weiteren Ausführungsform des beanspruchten Verfahrens wird im zweiten Schritt die Temperatur des Schmierstoffs mittels des Aktors selbst erfasst. Dazu weist der Aktor einen Kontaktbereich auf, der einstückig mit dem Aktor ausgebildet sein kann, also im Wesentlichen ein Abschnitt des Aktors ist. Alternativ kann der Kontaktbereich auch als Komponente ausgebildet sein, die mit dem Aktor verbunden ist. Um eine mechanische Reaktion des Aktors auf eine Temperaturänderung hervorzurufen ist der Kontaktbereich aus einem Formgedächtnismaterial hergestellt. Derartige Formgedächtnismaterialien können beispielsweise eine Nickel-Titan-Legierung oder eine Nickel-Titan-Kupfer-Legierung sein. Formgedächtnismaterialien bieten bei relativ geringen Temperaturdifferenzen relativ hohe Verformungen bzw. Eigenschaftsänderungen, die als mechanische Reaktion nutzbar sind, über die ein Verdrängungskörper bewegbar ist. Ferner weisen Formgedächtnismaterialien durch wiederholte thermische Betätigung keine substantielle Degradation auf. Formgedächtnismaterialien sind deshalb zuverlässig und bieten eine hohe Lebensdauer. Das beanspruchte Verfahren führt zu keiner signifikanten Erhöhung der Komplexität eines Getriebes, was auch eine hohe Wirtschaftlichkeit mit sich bringt.

Die beschriebene Aufgabenstellung wird auch durch eine erfindungsgemäße Industrie-Applikation gelöst. Die Industrie-Applikation weist eine Antriebseinheit und eine Abtriebseinheit auf, die drehmomentübertragend über ein Getriebe miteinander verbunden sind. Die Antriebseinheit kann beispielsweise als Elektromotor, Verbrennungsmotor oder als Hydraulikmotor ausgebildet sein, und ist dazu ausgebildet, eine für den Betrieb der Abtriebseinheit notwendige Antriebsleistung bereitzustellen. Die Abtriebseinheit kann beispielsweise als Mühle, Vertikalmühle, Zuckermühle, Zementmühle, Gesteinsbrecher, Förderband, Pumpe, Rollenpresse, Plattenband, Rohrmühle, Rehrohrofen, Drehwerk, Rührwerk, Hubvorrichtung, Müllpresse oder Schrottpresse ausgebildet sein. Die Antriebsleistung wird durch das Getriebe in puncto Drehzahl und Drehmoment beeinflusst.

Die zugrundliegende Aufgabenstellung wird auch durch eine erfindungsgemäße Windkraftanlage gelöst. Die Windkraftanlage weist einen Rotor und einen Generator auf, die drehmomentübertragend mittels eines Getriebes miteinander verbunden sind. Erfindungsgemäß ist das Getriebe nach einer der oben skizzierten Ausführungsformen ausgebildet. Alternativ oder ergänzend kann das Getriebe auch gemäß einem oben beschriebenen Betriebsverfahren betrieben werden.

Die Erfindung wird im Folgenden anhand einzelner Ausführungsformen beschrieben. Die Merkmale der einzelnen Ausführungsformen sind dabei untereinander kombinierbar. Die Figuren sind insoweit in gegenseitiger Ergänzung zu lesen, dass gleiche Bezugszeichen in den Figuren auch die gleichen technischen Bedeutungen haben. Es zeigen im Einzelnen:
- FIG 1: eine schematische Ansicht einer ersten Ausführungsform des beanspruchten Getriebes während eines ersten Verfahrensschritts;
- FIG 2: eine schematische Ansicht der ersten Ausführungsform des beanspruchten Getriebes während eines zweiten Verfahrensschritts;
- FIG 3: eine schematische Ansicht einer zweiten Ausführungsform des beanspruchten Getriebes;
- FIG 4: ein Ablaufdiagramm einer ersten Ausführungsform des beanspruchten Verfahrens;
- FIG 5: ein Diagramm eines thermischen Verhaltens eines Aktors gemäß einer dritten Ausführungsform;
- FIG 6: einen schematischen Aufbau einer Ausführungsform der beanspruchten Industrie-Applikation;
- FIG 7: einen schematischen Aufbau einer Ausführungsform einer beanspruchten Windkraftanlage.

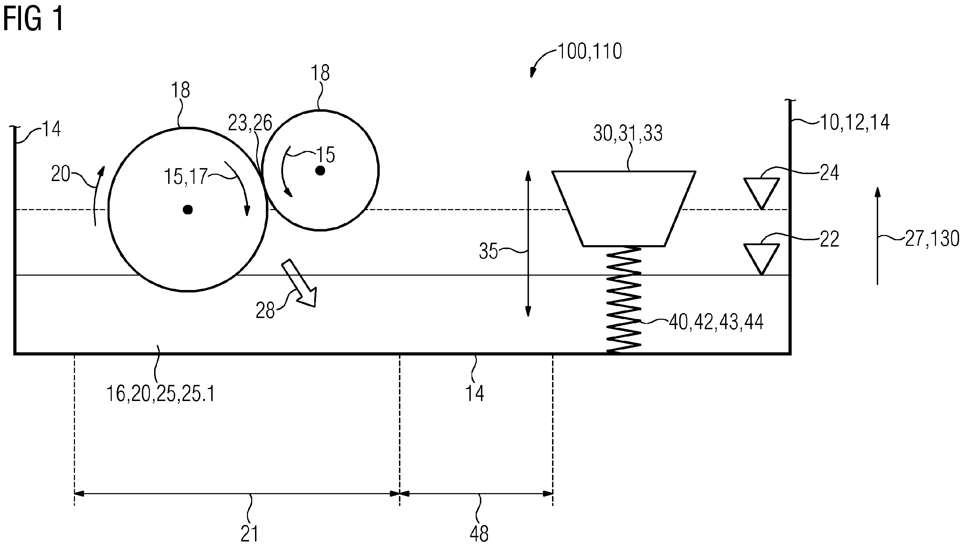

FIG 1 zeigt schematisch einen Aufbau einer ersten Ausführungsform des beanspruchten Getriebes 10. Das Getriebe 10 weist ein Gehäuse 12 auf, das eine Mehrzahl an Gehäusewandungen 14 umfasst, und in dem Zahnräder 18 drehmomentübertragend aufgenommen sind. Die Zahnräder 18 werden in einem bestimmungsgemäßen Betrieb in Drehung 15 versetzt. In einem ersten Schritt 110 eines Betriebsverfahrens 100 weist das Getriebe 10 in einem ersten Betriebszustand an einem Zahnrad 18 eine erste Drehzahl 17 auf. Durch das Zahnrad 18 taucht dabei in Schmierstoff 20 ein, der im Gehäuse 12 aufgenommen ist und so ein Reservoir 16 bildet. Durch den vorhandenen Schmierstoff 20 stellt sich bei der ersten Drehzahl 17 ein erster Schmierstoffpegel 22 ein. Das Zahnrad 18, das in den ersten Schmierstoffpegel 22 eintaucht, wird Schmierstoff 20 auch zu einem Kontakt 26 mit einem weiteren Zahnrad 18 transportiert und so eine Schmierung 23 gewährleistet. Durch den Betrieb des Getriebes 10 wird über zumindest ein Zahnrad 18 ein Wärmestrom 28 an den Schmierstoff 20 im Bereich 21 der Zahnräder 18 abgegeben. Eine im Schmierstoff 25 vorliegende Temperatur 25 wird so durch den Wärmestrom 28 vom zumindest einen Zahnrad 18 beeinflusst. Im stationären Betrieb stellt sich eine erste Temperatur 25.1 des Schmierstoffs 20 ein.

Im Getriebe 10 ist auch ein Verdrängungskörper 20 angeordnet, der als Tauchkörper 31 ausgebildet ist und im Wesentlichen eine Konusform 33 aufweist. Der Verdrängungskörper 30 ist über einen Aktor 40 mit der Gehäusewandung 14 verbunden, der dazu ausgebildet ist, den Verdrängungskörper 30 zu bewegen. Die Bewegung 35 des Aktors, und damit des Verdrängungskörpers 30, ist gemäß FIG 1 eine reversible Hubbewegung. Der Verdrängungskörper 30 ist im Zusammenwirken mit dem Aktor 40 dazu ausgebildet, in den Schmierstoff 20 eingetaucht oder herausgehoben zu werden. Der Aktor 40 weist eine Oberfläche 42 auf, die durch den Schmierstoff 20 zumindest teilweise benetzt wird, so dass ein thermisches Gleichgewicht zwischen dem Aktor 40 und dem Schmierstoff 20 durch Wärmeleitung erreichbar ist. Der Aktor 40 ist als Feder 44 ausgebildet, die bezogen auf ihr Volumen eine große Oberfläche 42 aufweist, so dass das thermische Gleichgewicht zwischen dem Schmierstoff 20 und dem Aktor 40 schnell erzielbar ist. Die in den Schmierstoff 20 eingetauchte Oberfläche 42 dient somit als Kontaktbereich 43 für die vorliegende Temperatur 25 des Schmierstoffs 20.

Der Aktor 40 ist aus einem Formgedächtnismaterial hergestellt, das dazu ausgebildet ist, zumindest eine seiner Eigenschaften in Abhängigkeit von der vorliegenden Temperatur 25 zu ändern. Infolgedessen ist die Bewegung 35 des Aktors 40 als mechanische Reaktion auf die Temperatur 25 des Schmierstoffs 20 hervorrufbar. Im Zustand nach FIG 1 ist der Verdrängungskörper 40 über den ersten Schmierstoffpegel 22 gehoben. Der Aktor 40 weist dabei einen erhöhten E-Modul auf, so dass die Feder 44, die als Druckfeder dient, den Verdrängungskörper 30 aus dem Schmierstoff 20 heraushebt. Durch ein Eintauchen des Verdrängungskörpers 30 in den Schmierstoff 20 ist der erste Schmierstoffpegel 22 auf einen zweiten Schmierstoffpegel 24 anhebbar. Ein solcher Pegelanstieg 27 ist in einem dritten Schritt 130 des beanspruchten Betriebsverfahrens 100 durch eine Änderung der Temperatur 25 des Schmierstoffs 20 durchführbar. Die Bewegung 35 des Aktors 40 tritt mit einer Verzögerung ein, die durch eine thermische Ausbreitungsstrecke 48 definiert ist. Eine durch einen Wärmestrom 28 von zumindest einem der Zahnräder 18 hervorgerufene Änderung der Temperatur 25 des Schmierstoffs 20 führt umso schneller zu einer Bewegung 35 des Aktors 40, je geringer die thermische Ausbreitungsstrecke 48 ist. Je näher der Aktor 40 an den Zahnrädern 18 positioniert ist, umso schneller erfolgt eine Bewegung 35 des Aktors 40 als temperaturabhängige mechanische Reaktion. Der Betrieb des Getriebes 10 mit einem Verdrängungskörper 30, der aus dem Schmierstoff 20 herausgehoben ist, bietet reduzierte Planschverluste und gewährleistet somit einen effizienten Betrieb bei einer hohen ersten Drehzahl 17.

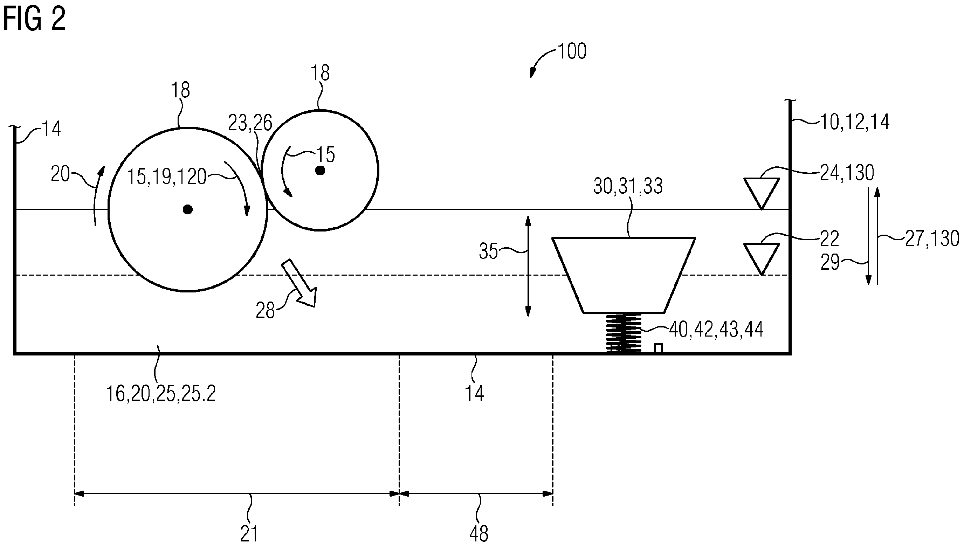

FIG 2 zeigt schematisch den Aufbau der ersten Ausführungsform des beanspruchten Getriebes 10 nach FIG 1 in einem anderen Stadium des beanspruchten Verfahrens 100. Nach FIG 2 liegt an einem der Zahnräder 18 eine zweite Drehzahl 19 vor, die niedriger ist als die erste Drehzahl 17 gemäß FIG 1. Durch die reduzierte zweite Drehzahl 19 wird durch den Kontakt 26 zwischen den Zahnrädern 18, an dem eine Schmierung 23 erfolgt, eine verringerte Wärmeentwicklung hervorgerufen. Der Wärmestrom 28, der in den Schmierstoff 20 eingeleitet wird, ist gegenüber FIG 1 somit auch reduziert. Die zweite Drehzahl 19 wird in einem zweiten Schritt 120, des Betriebsverfahrens 100 eingestellt. Folglich stellt sich im zweiten Schritt 120 im Schmierstoff 20 auch eine zweite Temperatur 25.2 ein, die niedriger ist als die erste Temperatur 25.1 nach FIG 1.

Der Aktor 40, der aus einem Formgedächtnismaterial hergestellt ist, verringert durch den Rückgang von der ersten Temperatur 25.1 auf die zweite Temperatur 25.2 seinen E-Modul. Infolgedessen wird der als Feder 44 ausgebildete Aktor 40 durch den Verdrängungskörper 30 zusammengedrückt, und so eine Bewegung 35 des Aktors, 40, und somit auch des Verdrängungskörpers 30, als temperaturabhängige Reaktion auf die Änderung von der ersten Drehzahl 17 auf die zweite Drehzahl 19. Der Verdrängungskörper 30 ist als Tauchkörper 31 ausgebildet und ruft durch sein Eintauchen in den Schmierstoff 20 in einem dritten Schritt 130 des Betriebsverfahrens 100 einen Pegelanstieg 27 hervor. Dabei steigt der Schmierstoff 20 von einem ersten Schmierstoffpegel 22, wie auch in FIG 1 dargestellt, auf einen erhöhten zweiten Schmierstoffpegel 24 an. Der in FIG 2 dargestellte Zustand ist bei einem erneuten Ansteigen der Temperatur 25 des Schmierstoffs 20 durch einen daraus folgenden Pegelrückgang 29 umkehrbar. Je geringer die thermische Ausbreitungsstrecke 48 zwischen dem Aktor 40 und dem Bereich 21 der Zahnräder 18 ist, umso schneller ist eine Bewegung 35 des Aktors 40, und damit des Verdrängungskörpers 30 einleitbar.

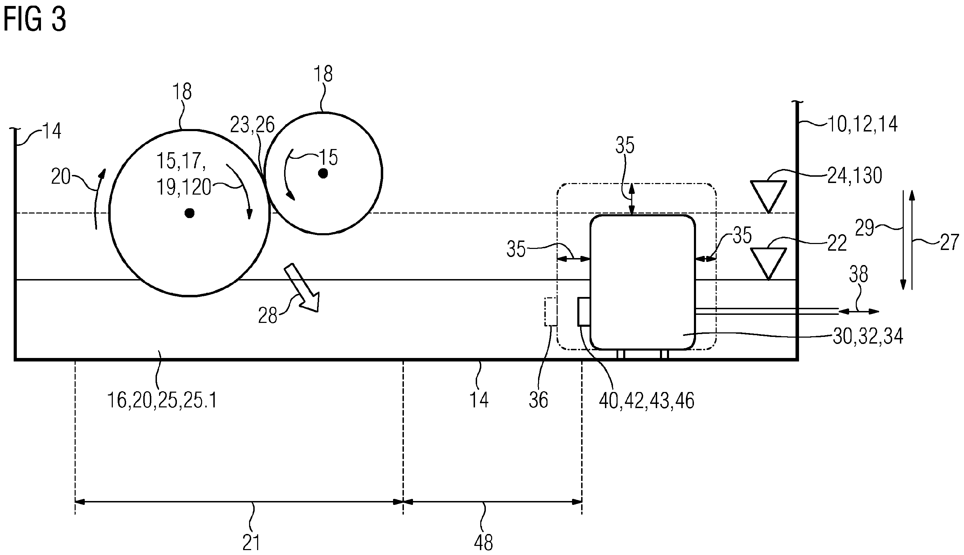

Eine zweite Ausführungsform des beanspruchten Getriebes 10 ist in FIG 3 abgebildet. Das Getriebe 10 weist ein Gehäuse 12 auf, das eine Mehrzahl an Gehäusewandungen 14 umfasst, und in dem Zahnräder 18 drehmomentübertragend aufgenommen sind. Die Zahnräder 18 werden in einem bestimmungsgemäßen in Drehung 15 versetzt. In einem ersten Schritt 110 eines Betriebsverfahrens 100 weist das Getriebe 10 an einem Zahnrad 18 eine erste Drehzahl 17 auf. Das Zahnrad 18 taucht dabei in Schmierstoff 20 ein, der im Gehäuse 12 aufgenommen ist und so ein Reservoir 16 bildet. Durch den vorhandenen Schmierstoff 20 stellt sich bei der ersten Drehzahl 17 ein erster Schmierstoffpegel 22 ein. Das Zahnrad 18, das in den ersten Schmierstoffpegel 22 eintaucht, wird Schmierstoff 20 auch zu einem Kontakt 26 mit einem weiteren Zahnrad 18 transportiert und so eine Schmierung 23 gewährleistet. Durch den Betrieb des Getriebes 10 wird über zumindest ein Zahnrad 18 ein Wärmestrom 28 an den Schmierstoff 20 im Bereich 21 der Zahnräder 18 abgegeben. Eine im Schmierstoff 25 vorliegende Temperatur 25 wird so durch den Wärmestrom 28 vom zumindest einen Zahnrad 18 beeinflusst. Im stationären Betrieb stellt sich eine erste Temperatur 25.1 des Schmierstoffs 20 ein.

Das Getriebe 10 umfasst auch einen Verdrängungskörper 30, der als Expansionskörper 32 ausgebildet ist und mit einer Gehäusewandung 14 verbunden ist. Der Expansionskörper 32 ist als Blase ausgebildet, die mit einem Fluid 38, insbesondere Druckluft, befüllbar ist. Durch ein Befüllen mit dem Fluid 38 ist der Expansionskörper von einem kontrahierten Zustand 34 auf einen expandierten Zustand 36 ausdehnbar und umgekehrt verkleinerbar. Beim Übergang vom kontrahierten Zustand 34 auf den expandierten Zustand 36 und umgekehrt führt der Expansionskörper 35 eine Bewegung 35 durch, durch die wiederum ein Übergang zwischen einem ersten und einem zweiten Schmierstoffpegel 22, 24 hervorrufbar ist. In einem kontrahierten Zustand 36 des Verdrängungskörpers 30, also des Expansionskörpers 32, liegt ein erster Schmierstoffpegel 22 vor, der niedriger ist als ein zweiter Schmierstoffpegel 24, der bei einem expandierten Zustand 36 des Verdrängungskörpers 30 vorliegt. Der Verdrängungskörper 30 weist einem Aktor 40 auf, der als Ventil 46 ausgebildet ist. Ein Abschnitt des Aktors 40 ist als Kontaktbereich 43 ausgebildet, der aus einem Formgedächtnismaterial hergestellt ist. Durch ein Benetzen des Aktors 40 mit dem Schmierstoff 20 wird die Temperatur 25 des Schmierstoffs 20 vom Aktor 40 erfasst. In Abhängigkeit von der vorliegenden Temperatur 25 des Schmierstoffs 20 wird durch Ändern einer Eigenschaft des Aktors 40, beispielsweise dessen E-Moduls, eine mechanische Reaktion hervorgerufen. Das Ventil 46 kann in Abhängigkeit von der Temperatur 25 geöffnet werden, um Fluid 38 in den Schmierstoff 20 abzulassen und so den Verdrängungskörper 30 auf den kontrahierten Zustand 34 verkleinern. Dadurch wird ist eine Pegelsenkung 29 durchführbar.

Umgekehrt kann in Abhängigkeit von der Temperatur 25 des Schmierstoffs 20 das Ventil 46 geschlossen werden, um so unter Zufuhr von Fluid 38 den Verdrängungskörper 30 in den expandierten Zustand 36 zu überführen. Dadurch wird ein Pegelanstieg 27 hervorgerufen. In Abhängigkeit von der ersten bzw. zweiten Drehzahl 17, 19 ist somit ein verringerter erster Schmierstoffpegel 22 und ein erhöhter zweiter Schmierstoffpegel 24 einstellbar. Je näher der Verdrängungskörper 30 am Bereich 21 der Zahnräder 18 angeordnet ist, umso schneller ist die Bewegung 35 durch des Verdrängungskörpers 30 auslösbar. Eine dementsprechende Verzögerung ist durch eine Länge der thermischen Ausbreitungsstrecke 48 im Schmierstoff 20 bestimmt.

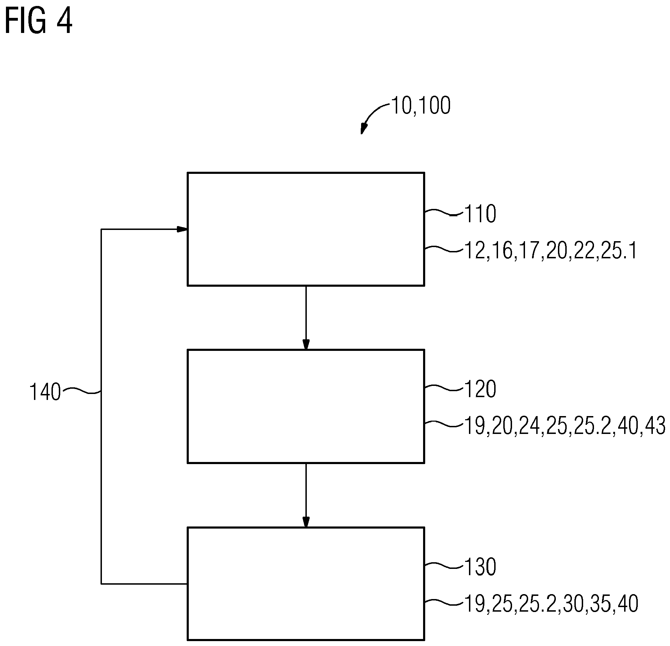

FIG 4 zeigt schematisch ein Ablaufdiagramm für eine Ausführungsform des beanspruchten Betriebsverfahrens 100, das beispielsweise auf FIG 1 und FIG 2 übertragbar ist. In einem ersten Schritt 110 wird ein Getriebe 10 mit einer ersten Drehzahl 17 betrieben, das ein Gehäuse 12 aufweist, das als Reservoir 16 dient und in dem ein Schmierstoff 20 aufgenommen ist. Infolge des Betriebs mit der ersten Drehzahl wird ein erster Schmierstoffpegel 22 im Getriebe 10 einstellt. Dabei stellt sich auch eine erste Temperatur 25.1 für den Schmierstoff 20 ein.

In einem zweiten Schritt 120 wird die erste Drehzahl 17 zu einer zweiten Drehzahl 19 geändert. Je nachdem, ob die zweite Drehzahl 19 höher oder niedriger ist als die erste Drehzahl 17, ist wird dementsprechend ein höherer oder niedrigerer zweiter Schmierstoffpegel 24 angestrebt. Gleichermaßen wird durch den Übergang von der ersten auf die zweite Drehzahl 17, 19 ein Übergang von der ersten Temperatur 25.1 auf eine zweite Temperatur 25.2 im Schmierstoff 20 hervorgerufen. Im zweiten Schritt 120 wird auch im Reservoir 16 die vorliegende Temperatur 25 des Schmierstoffs 20 erfasst. Das Erfassen der Temperatur 25 erfolgt dabei mittels eines Kontaktbereichs 43, der einem Aktor 40 zugeordnet ist und aus einem Formgedächtnismaterial hergestellt ist. Der Kontaktbereich 43, und damit der Aktor 40, werden dazu zumindest teilweise mit dem Schmierstoff 20 benetzt, der im Getriebe 10 aufgenommen ist.

Ferner wird in einem dritten Schritt 130 durch das Erfassen der Temperatur 25 des Schmierstoffs 20 im Aktor 40 eine mechanische Reaktion ausgelöst, die zu einer Bewegung 35 des Aktors 40 führt. Die mechanische Reaktion des Aktors 40 ist dabei auf eine temperaturabhängige Änderung einer Eigenschaft des Aktors 40 zurückzuführen. Der Aktor 40 ist mit einem Verdrängungskörper 30 verbunden, der infolgedessen die gleiche Bewegung 35 vollführt. Durch die Bewegung 35 des Aktors 40 und des Verdrängungskörpers 30 im Schmierstoff 20 wird ein zweiter Schmierstoffpegel 24 eingestellt.

Auf den dritten Schritt 130 folgt eine Rückführschleife 40, in der die im dritten Schritt 130 vorliegende zweite Drehzahl 19 und die vorliegende zweite Temperatur 25.2 im Schmierstoff 20 als Ausgangspunkte für einen erneuten Durchlauf der bisherigen Schritte 110, 120, 130 genutzt werden.

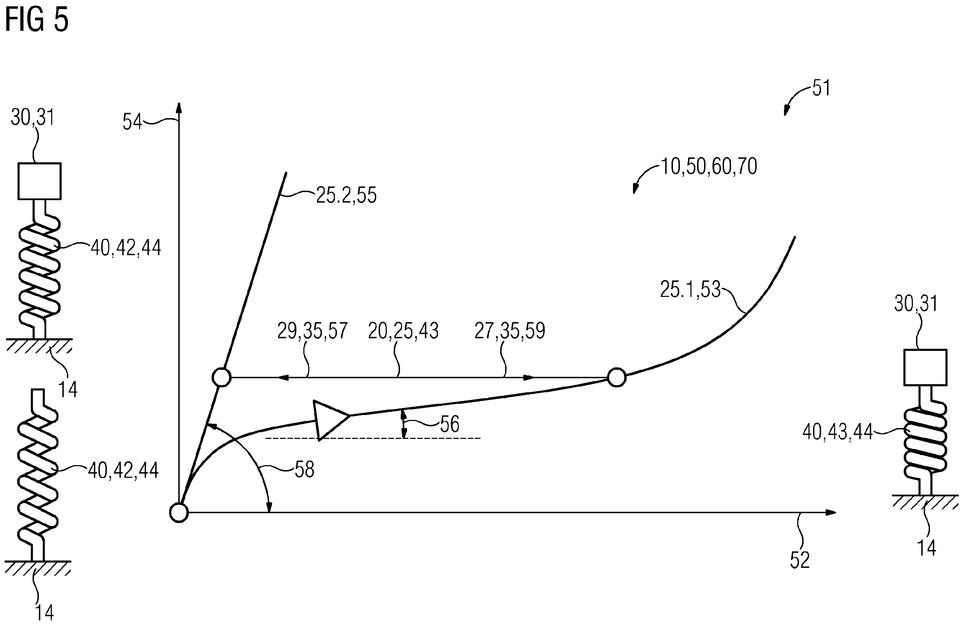

Darüber hinaus zeigt FIG 5 ein Diagramm 50 zum Verhalten eines Aktors 40, der aus einem Formgedächtnismaterial hergestellt ist. Ein solcher Aktor 40 ist beispielsweise in den Ausführungsformen gemäß den FIG 1, FIG 2 und FIG 4 einsetzbar. Der Aktor 40 ist als Feder 44, insbesondere als Druckfeder, ausgebildet, die im Betrieb zumindest teilweise in Schmierstoff 20 eingetaucht ist und mit einer Gehäusewandung 14 eines Getriebes 10 verbunden ist. Das Getriebe 10 ist dabei in einer nicht näher dargestellten Industrie-Applikation 60 oder einer nicht näher dargestellten Windkraftanlage 70 einsetzbar. Das Diagramm 50 weist eine horizontale Dehnungsachse 52 auf und eine vertikale Kraftachse 54. Der Ursprung des Diagramms 50 geht von einem Aktor 40 aus, der unbelastet ist, wie links unten versinnbildlicht. Das Diagramm 50 zeigt eine erste Kennlinie 53, die das Dehnungsverhalten des Aktors 40 bei einer ersten Temperatur 25.1 des Schmierstoffs 20 zeigt. Unter einer Druckbeanspruchung des Aktors 40, die durch das Eigengewicht eines als Tauchkörper 31 ausgebildeten Verdrängungskörpers 30 hervorgerufen wird, ist der Aktor 40 im Wesentlichen stark zusammengedrückt. Dies ist in FIG 5 rechts unten versinnbildlicht.

Ferner zeigt das Diagramm 50 eine zweite Kennlinie 55, die ein Dehnungsverhalten des Aktors 40 bei einer zweiten Temperatur 25.2 des Schmierstoffs 20 zeigt. Der Aktor 40 verhält sich dabei steifer als bei der ersten Kennlinie 53. Das Eigengewicht des Verdrängungskörpers 30 führt damit zu einem geringeren Zusammendrücken als bei der ersten Kennlinie 53, was in FIG 5 links oben dargestellt ist.

Durch ein Ändern einer Temperatur 25 des Schmierstoffs 20, in den der Aktor 40 zumindest teilweise eingetaucht ist, tritt eine der beiden Kennlinien 53, 55 zutage. Die Temperatur 25 wird an der Oberfläche 42 des Aktors 40 erfasst, die als Kontaktbereich 43 dient. Bei der ersten Kennlinie 53 weist der Aktor 40 einen ersten E-Modul 56 auf, der im Wesentlichen als Winkel einer Tangente zur ersten Kennlinie 53 dargestellt ist. Korrespondierend weist der Aktor 40 bei der zweiten Kennlinie 55 einen zweiten E-Modul 58 auf, der höher ist als der erste E-Modul 56. Dadurch, dass der Aktor 40 aus einem Formgedächtnismaterial hergestellt ist, kann in einem definierbaren Bereich der Temperatur 25 der Aktor 40 bewegt werden, und infolgedessen auch der Verdrängungskörper 30. Ein Übergang zur ersten Temperatur 25.1 führt zu ein Pegelanstieg 27, während ein Übergang zur zweiten Temperatur 25.2 zu einem Pegelrückgang 29 führt, da dementsprechend der Verdrängungskörper 30 in den Schmierstoff 20 eingetaucht wird oder herausgehoben wird. Da der Aktor 40 als Feder 44 ausgebildet ist, weist der Aktor 40 auch eine im Verhältnis zu seinem Volumen hohe Oberfläche 42 auf. Eine Änderung der Temperatur 25 im Schmierstoff 20 wird so schnell vom Aktor 40 nachvollzogen. Dadurch erfolgt ein Übergang von der ersten Kennlinie 53 auf die zweite Kennlinie 55 und umgekehrt schnell. Hier durch insgesamt eine temperaturabhängige Pegel-Charakteristik 51 des Getriebes 10 definiert.

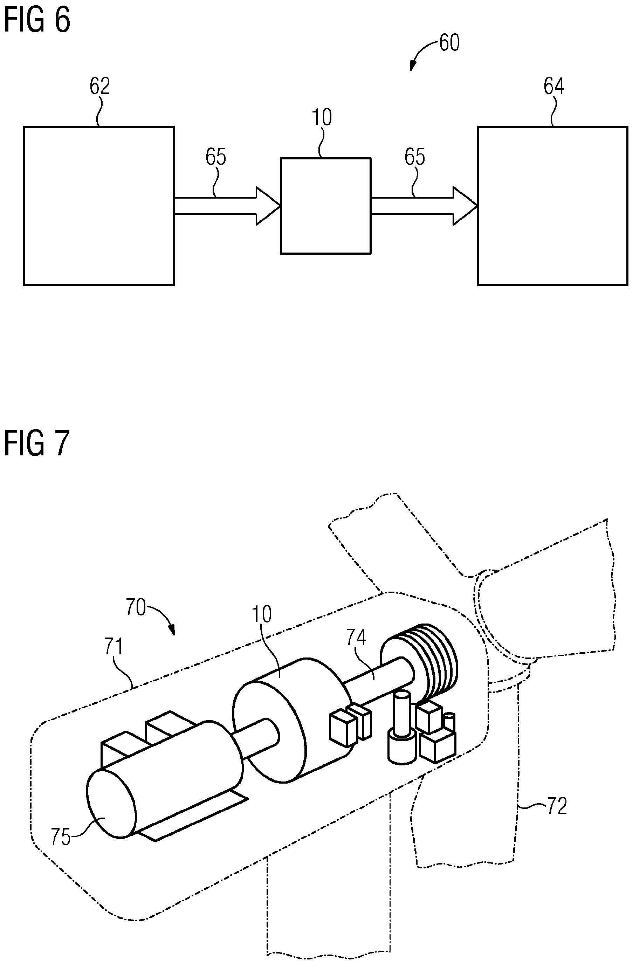

FIG 6 zeigt schematisch den Aufbau einer beanspruchten Industrie-Applikation 60, die eine Antriebseinheit 62 und eine Abtriebseinheit 64 aufweist, die drehmomentübertragend über ein Getriebe 10 miteinander verbunden sind. Die Antriebseinheit 62 ist dazu ausgebildet, eine Antriebsleistung 65 bereitzustellen, die für den Betrieb der Abtriebseinheit 64 notwendig ist. Die Antriebseinheit 62 ist dazu beispielsweise als Elektromotor, als Verbrennungsmotor, oder als Hydraulikmotor ausgebildet. Die Abtriebseinheit 64 ist als mechanische Anwendung ausgebildet. Die Abtriebseinheit 64 ist dementsprechend ausgebildet, dass die Industrie-Applikation 60 beispielsweise eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ist. Das Getriebe 10 ist dabei gemäß einer der oben beschriebenen Ausführungsformen ausgebildet und/oder dazu geeignet, eine Ausführungsform des beschriebenen Verfahrens 100 durchzuführen. Dadurch ist die Antriebseinheit 62, und dementsprechend auch die Abtriebseinheit 64, dynamisch betreibbar. Der Schmierstoffpegel 22, 24 durch das skizzierte Getriebe 10 ist schnell anpassbar. Diese gewonnene Dynamik im Betrieb ist für einen flexiblen, und damit wirtschaftlichen Betrieb der Industrie-Applikation nutzbar.

Ferner ist in FIG 7 eine Ausführungsform einer beanspruchten Windkraftanlage 70 dargestellt. Die Windkraftanlage 70 weist einen Rotor 72 auf, der an einer Gondel 71 drehbar angebracht ist. Der Rotor 72 ist mit einer Rotorwelle 74 verbunden, durch die über ein Getriebe 10 ein Generator 75 angetrieben wird. Das Getriebe 10 ist dabei nach einer der oben dargestellten Ausführungsformen ausgebildet. Durch das verbesserte Getriebe 10 wird für die Windkraftanlage 70 ein dynamischerer Betrieb ermöglicht, was eine höhere Ausbeute an Elektrizität ermöglicht, ohne den zu erwartenden Wartungsaufwand zu erhöhen.

## Patentansprüche

1. Getriebe (10), umfassend ein Reservoir (16) für einen Schmierstoff (20) zur Schmierung von Zahnrädern (18) und einen Verdrängungskörper (30), der zu einem Einstellen eines Schmierstoffpegels (22, 24) ausgebildet ist, **dadurch gekennzeichnet, dass** das Getriebe (10) einen Aktor (40) aufweist, der zu einem temperaturabhängigen Bewegen (35) des Verdrängungskörpers (30) durch eine Benetzung mit dem Schmierstoff (20) ausgebildet ist.

2. Getriebe (10) nach Anspruch 1, **dadurch gekennzeichnet, dass** der Aktor (40) einen temperaturabhängigen E-Modul (56, 58) aufweist.

3. Getriebe (10) nach Anspruch 1 oder 2, **dadurch gekennzeichnet, dass** der Verdrängungskörper (30) als Expansionskörper (32) oder als Tauchkörper (31) ausgebildet ist.

4. Getriebe (10) nach einem der Ansprüche 1 bis 3, **dadurch gekennzeichnet, dass** der Aktor (40) im Reservoir (16) in einem Bereich (21) eines Zahnrads (18) angeordnet ist.

5. Getriebe (10) nach einem der Ansprüche 1 bis 4, **dadurch gekennzeichnet, dass** das der Aktor (40) einen Kontaktbereich (43) aufweist, der aus einem Formgedächtnismaterial hergestellt ist.

6. Getriebe (10) nach einem der Ansprüche 1 bis 5, **dadurch gekennzeichnet, dass** der Aktor (40) unmittelbar oder über einen Übersetzungsmechanismus mechanisch mit dem Verdrängungskörper (30) verbunden ist.

7. Getriebe (10) nach Anspruch 6, **dadurch gekennzeichnet, dass** der Tauchkörper (31) mit einer Mehrzahl an Aktoren (40) verbunden ist, durch die eine temperaturabhängige Pegel-Charakteristik (51) einstellbar ist.

8. Getriebe (10) nach einem der Ansprüche 4 bis 7, **dadurch gekennzeichnet, dass** der Aktor (40) zumindest eine Feder (44), insbesondere eine Schraubenfeder, Tellerfeder oder Festkörperfeder, umfasst.

9. Betriebsverfahren (100) für ein Getriebe (10), das ein Reservoir (16) mit einem Schmierstoff (20) zur Schmierung (23) von Zahnrädern (18) aufweist, umfassend die Schritte:
a) Betrieb des Getriebes (10) in einem ersten Betriebszustand bei einem ersten Schmierstoffpegel (22);
b) Einstellen eines zweiten Betriebszustands und Erfassen einer Schmierstofftemperatur (25) im Reservoir (16);
c) Einstellen eines zweiten Schmierstoffpegels (24) in Abhängigkeit von der erfassten Schmierstofftemperatur (25);
wobei das Einstellen des zweiten Schmierstoffpegels (24) mittels eines Aktors (40) erfolgt, der durch ein Benetzen mit dem Schmierstoff (20) zu einem temperaturabhängigen Bewegen (35) eines Verdrängungskörpers (30) ausgebildet ist.

10. Betriebsverfahren (100) nach Anspruch 9, **dadurch gekennzeichnet, dass** im ersten Betriebszustand eine erste Drehzahl (17) vorliegt und/oder im zweiten Betriebszustand eine zweite Drehzahl (19) vorliegt.

11. Betriebsverfahren (100) nach Anspruch 9 oder 10, **dadurch gekennzeichnet, dass** der Verdrängungskörper (30) als Expansionskörper (32) oder als Tauchkörper (31) ausgebildet ist.

12. Betriebsverfahren (100) nach einem der Ansprüche 9 bis 11 **dadurch gekennzeichnet, dass** das Einstellen des zweiten Schmierstoffpegels (24) selbsttätig erfolgt.

13. Betriebsverfahren (100) nach einem der Ansprüche 9 bis 12, **dadurch gekennzeichnet, dass** die Schmierstofftemperatur (25) im Schritt b) mittels des Aktors (40) erfasst wird, der einen Kontaktbereich (43) aus einem Formgedächtnismaterial aufweist.

14. Industrie-Applikation (60), umfassend eine Antriebseinheit (62) und eine Abtriebseinheit (64), die über ein Getriebe (10) drehmomentübertragend miteinander verbunden sind, **dadurch gekennzeichnet, dass** das Getriebe (10) nach einem der Ansprüche 1 bis 8 ausgebildet ist und/oder gemäß einem Betriebsverfahren (100) nach einem der Ansprüche 9 bis 13 betreibbar ausgebildet ist.

15. Windkraftanlage (70), umfassend einen Rotor (72), der über ein Getriebe (10) drehmomentübertragend mit einem Generator (75) verbunden ist, **dadurch gekennzeichnet, dass** das Getriebe (10) nach einem der Ansprüche 1 bis 8 ausgebildet ist und/oder gemäß einem Betriebsverfahren (100) nach einem der Ansprüche 9 bis 13 betreibbar ausgebildet ist.
